# FASCICULE DE BREVET EUROPEEN

(11) **EP 3 039 341 B1**
(45) Date de publication et mention de la délivrance du brevet: **05.12.2018**
(21) Numéro de dépôt: 14790221.7
(22) Date de dépôt: 02.10.2014
(51) Int. Cl.: F23R 3/04

(54) **CHAMBRE DE COMBUSTION DE TURBOMACHINE POURVUE DE MOYENS DE DÉFLECTION D'AIR POUR RÉDUIRE LE SILLAGE CREÉ PAR UNE BOUGIE D'ALLUMAGE**
STRÖMUNGSMASCHINEBRENNKAMMER MIT LUFTLEITVORRICHTUNGEN FÜR DIE VERRINGERUNG VON DER WIRBELSCHLEPPE DES ANZÜNDERS
TURBOMACHINE COMBUSTION CHAMBER COMPRISING AIR DEFLECTION MEANS FOR REDUCING WAKE CREATED BY IGNITER

(30) Priorité: 04.10.2013 FR 1359659
(43) Date de publication de la demande: 06.07.2016
(73) Titulaire: Safran Aircraft Engines, 75015 Paris (FR)
(72) Inventeur: LEGLAYE, François, F-77550 Moissy-Cramayel Cedex (FR); BIDART, Olivier, F-77550 Moissy-Cramayel Cedex (FR); PIREYRE, Pierre-François, F-77550 Moissy-Cramayel Cedex (FR); PIEUSSERGUES, Christophe, F-77550 Moissy-Cramayel Cedex (FR)
(74) Mandataire: Brevalex
(86) Numéro de dépôt international: PCT/FR2014/052500
(87) Numéro de publication internationale: WO 2015/049468

(56) Documents cités:
- EP-A2- 2 505 921
- EP-A2- 2 527 739
- EP-A2- 2 527 742
- FR-A1- 2 975 465
- US-A- 5 603 212

## Description

### DOMAINE TECHNIQUE

La présente invention se rapporte au domaine des chambres de combustion des turbomachines, notamment destinées à équiper les aéronefs.

L'invention concerne plus particulièrement le refroidissement d'une paroi annulaire d'une telle chambre de combustion équipée d'un orifice de passage pour une bougie d'allumage.

### ÉTAT DE LA TECHNIQUE ANTÉRIEURE

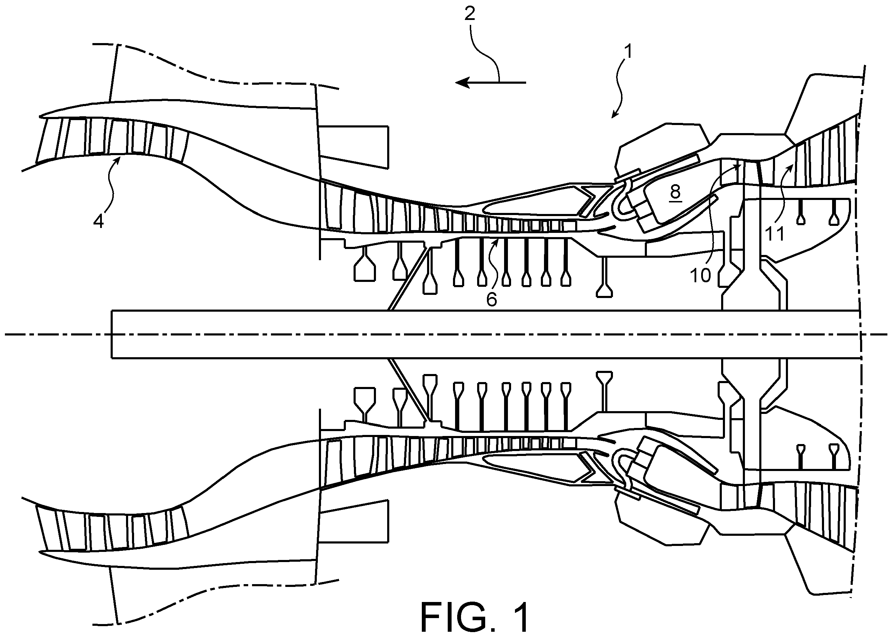

La figure 1 illustre un exemple typique de turbomachine 1 d'un type connu, par exemple un turboréacteur d'aéronef à double flux et à double corps.

La turbomachine 1 comprend, successivement selon la direction de poussée représentée par la flèche 2 correspondant également à la direction générale d'écoulement des gaz dans le turboréacteur, un compresseur basse pression 4, un compresseur haute pression 6, une chambre annulaire de combustion 8, une turbine haute pression 10 et une turbine basse pression 11.

D'une manière bien connue, la chambre de combustion 8 est montée en aval du compresseur haute pression 6 destiné à alimenter cette chambre en air sous pression, et en amont de la turbine haute pression 10 destinée à entraîner en rotation le compresseur haute pression 6 sous l'effet de la poussée des gaz provenant de la chambre de combustion.

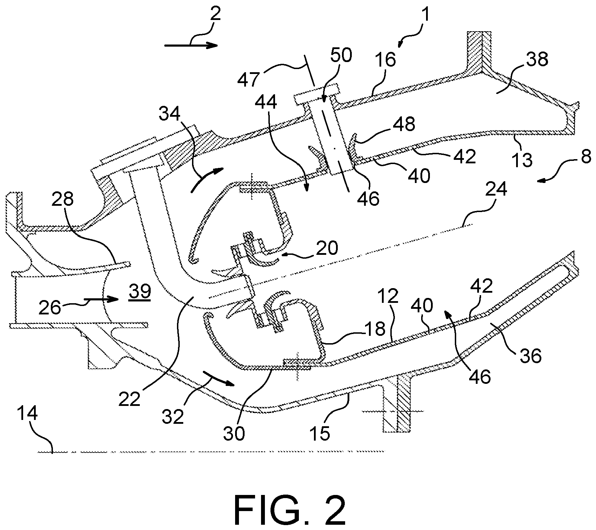

La figure 2 illustre à plus grande échelle la chambre de combustion 8 et son environnement immédiat.

La chambre de combustion 8 comprend deux parois annulaires coaxiales, respectivement radialement interne 12 et radialement externe 13, qui s'étendent autour de l'axe longitudinal 14 de la chambre de combustion.

Ces deux parois annulaires 12 et 13 sont fixées en aval à des carters interne 15 et externe 16 de la chambre, et sont reliées l'une à l'autre à leur extrémité amont par une paroi annulaire de fond de chambre 18.

La paroi annulaire de fond de chambre 18 comporte une rangée annulaire d'orifices régulièrement répartis autour de l'axe 14 de la chambre de combustion, et dans lesquels sont montés des systèmes d'injection 20 associés à une rangée annulaire d'injecteurs de carburant 22 présentant chacun un axe 24 d'émission de carburant.

Chaque système d'injection 20 comporte des orifices destinés à l'injection, dans la chambre de combustion, d'une partie du flux d'air 26 provenant du diffuseur 28 monté en sortie du compresseur haute pression de la turbomachine.

Par ailleurs, les parois annulaires 12 et 13 de la chambre de combustion sont reliées à leur extrémité amont à un carénage annulaire 30 comportant des orifices alignés avec les systèmes d'injection 20 pour le passage des injecteurs 22 et de l'air alimentant les systèmes d'injection 20. Ce carénage 30 a pour fonctions principales la protection de la paroi de fond de chambre 18 et le guidage de parties 32 et 34 du flux d'air 26 qui circulent vers l'aval respectivement le long des parois annulaires interne 12 et externe 13 de la chambre de combustion, au sein de deux espaces de contournement respectivement interne 36 et externe 38. Dans ce qui suit, ces parties 32 et 34 du flux d'air 26 sont respectivement dénommées « flux d'air de contournement interne » et « flux d'air de contournement externe ». Les espaces de contournement interne 36 et externe 38 forment, avec un espace amont 39 qui les raccorde l'un à l'autre, une enceinte annulaire dans laquelle s'étend la chambre de combustion 8.

Les parois annulaires 12 et 13 de la chambre de combustion comportent chacune deux rangées annulaires d'orifices d'entrée d'air 40, 42 destinés à l'injection d'une partie de chaque flux d'air de contournement 32, 34 dans la chambre de combustion.

Une première de ces rangées d'orifices est formée autour d'une région amont 44 de la chambre de combustion couramment appelée « zone primaire », dans laquelle ont lieu en fonctionnement les réactions de combustion du mélange d'air et de carburant. Les orifices 40 de cette première rangée sont pour cette raison couramment appelés « orifices primaires ».

La deuxième rangée d'orifices est formée en aval autour d'une région 46 de la chambre couramment appelée « zone de dilution », dans laquelle les gaz de combustion sont dilués et refroidis. Les orifices 42 de cette deuxième rangée sont pour cette raison couramment appelés « orifices de dilution ».

Les parois annulaires 12 et 13 sont en outre pourvues de nombreuses micro-perforations réparties sensiblement sur toute la surface de ces parois et destinées à créer un film d'air de refroidissement le long de chacune de ces parois au sein de la chambre de combustion 8. Ces micro-perforations, qui ont en général des diamètres compris entre 0,3 et 0,6 mm environ, ne sont pas représentées sur la figure 2 pour des raisons d'échelle.

Par ailleurs, la paroi annulaire radialement externe 13 comporte un orifice 46 de passage de bougie, présentant un axe 47, et muni d'une douille 48 de guidage dans laquelle s'étend une bougie d'allumage 50 montée sur le carter externe 16 et destinée à initier la combustion du mélange d'air et de carburant au démarrage de la turbomachine.

Il est à noter que dans ce qui suit, l'expression « module de chambre de combustion » désigne un ensemble comprenant au moins la chambre de combustion 8 et la bougie d'allumage 50.

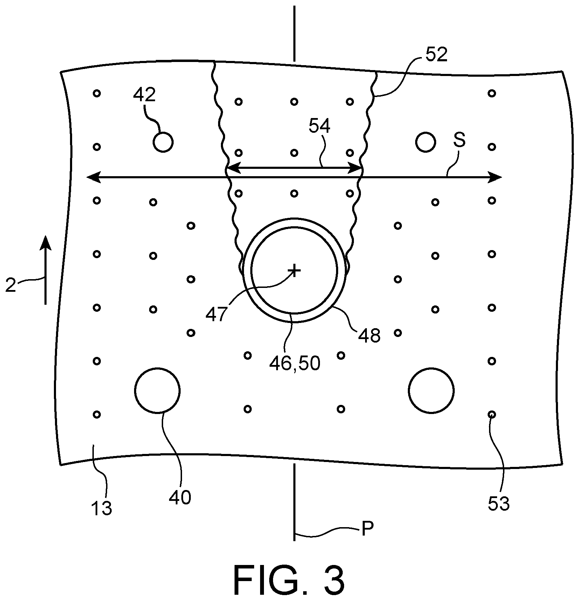

Toutefois, la bougie d'allumage 50 et la douille 48 génèrent un sillage 52 au sein du flux d'air de contournement externe 34, comme l'illustre la figure 3.

Ce sillage 52 se développe vers l'aval en étant centré par rapport à un plan axial P médian de l'orifice 46 de passage de bougie, dans le cas où le flux d'air 26 (figure 2) fourni par le compresseur haute pression s'écoule vers l'aval sensiblement sans composante giratoire. Ceci peut être le cas lorsque le compresseur haute pression est de type axial, comme dans l'exemple illustré.

En revanche, dans le cas où le flux d'air 26 fourni par le compresseur haute pression s'écoule vers l'aval de manière hélicoïdale, c'est-à-dire avec une composante giratoire, le sillage 52 se développe vers l'aval globalement selon une direction inclinée par rapport au plan axial P médian de l'orifice 46 de passage de bougie. Ceci peut être le cas notamment lorsque le compresseur haute pression est de type centrifuge.

Il est à noter que par « plan axial », il faut comprendre un plan passant par l'axe 14 (figure 2) de la chambre de combustion 8, qui se confond avec l'axe de la turbomachine. Il est à noter que le plan P correspond au plan de section de la figure 2.

Il est également à noter que la figure 3 illustre les micro-perforations 53 qui assurent le refroidissement de la paroi annulaire radialement externe 13. Pour des raisons de clarté, ces micro-perforations sont représentées plus grandes et réparties selon une densité moindre que dans la réalité.

Dans tous les cas, le sillage 52 se traduit par une dépression dans la région du flux d'air de contournement externe 34 occultée par la douille 48 de guidage de bougie.

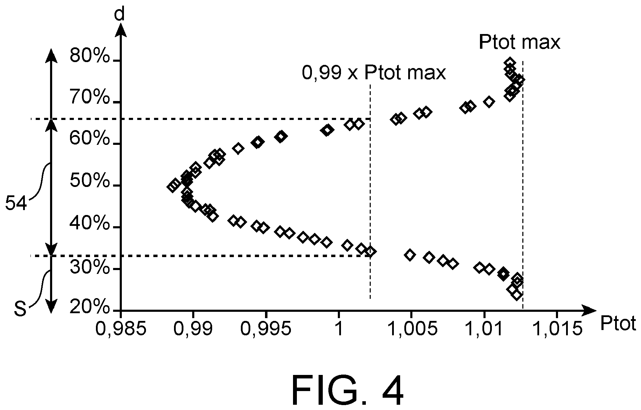

La figure 4 représente la pression totale Ptot de ce flux d'air 34 en fonction de la position d mesurée le long du segment S transversal de la figure 3. Dans ce qui suit, pour chaque segment S, on définit une zone de sillage 54 (figure 3) comme étant une zone du segment S dans laquelle la pression totale Ptot du flux d'air 34 est inférieure à 99% du maximum Ptotmax pris par cette pression totale le long de ce segment S. On définit un sillage 52 comme étant une réunion de zones de sillage 54 contigües se succédant de l'amont vers l'aval à partir de l'orifice 46 de passage de bougie.

Or, la présence d'un tel sillage perturbe l'efficacité du refroidissement assuré par les micro-perforations 53.

En effet, l'écoulement de l'air au travers des micro-perforations 53 de la paroi radialement externe 13 résulte de l'écart entre la pression totale Ptot du flux d'air de contournement 34 et la pression statique au sein de la chambre de combustion 8. Cet écart de pression est en général de l'ordre de 3%. De ce fait, la diminution de pression totale de l'ordre de 1% observée au sein du sillage 52 induit une perte de débit au sein des micro-perforations pouvant atteindre 20% environ, voire davantage.

Une telle réduction de l'efficacité du refroidissement de la paroi annulaire précitée se traduit par un amoindrissement de la durée de vie de cette paroi, mais aussi par un risque de dessertissage de la douille de guidage de bougie.

EP 2527739 A2 divulgue des moyens de déflection d'air pour réduire le sillage crée par une bougie d'allumage, lesdits moyens de déflection se rapprochant du plan médian du sillage. Ce document divulgue donc toutes les caractéristiques dans le préambule de la revendication 1.

EP 2527742 A2 divulgue aussi des moyens de déflection d'air pour réduire le sillage crée par une bougie d'allumage, lesdits moyens de déflection se rapprochant du plan médian du sillage.

EP 2505921 A2 divulgue des orifices de purge d'air dans un tube de raccordement, qui agissent comme des moyens de déflection d'air pour réduire le sillage crée par ledit tube.

US 5603212 A des orifices d'apport d'air pour réduire le sillage crée par un tube d'injection de fuel.

### EXPOSÉ DE L'INVENTION

L'invention a notamment pour but d'apporter une solution simple, économique et efficace à ce problème.

Elle propose à cet effet un module de chambre de combustion pour turbomachine, comprenant :
- une enceinte annulaire,
- une chambre de combustion annulaire logée dans ladite enceinte annulaire et comportant au moins une paroi annulaire délimitant ladite chambre de combustion et comportant un orifice de passage de bougie ainsi qu'une pluralité de micro-perforations pour l'entrée d'air de refroidissement dans ladite chambre de combustion pour le refroidissement de ladite paroi annulaire, et
- une bougie d'allumage s'étendant dans ladite enceinte annulaire et au travers dudit orifice de passage de bougie.

Ce module de chambre de combustion est destiné à recevoir un flux d'air issu d'un compresseur de turbomachine et s'écoulant globalement de l'amont vers l'aval de la chambre de combustion au sein de ladite enceinte annulaire, et dont une partie a vocation à contourner la chambre de combustion en longeant ladite paroi annulaire de celle-ci et en baignant ladite bougie d'allumage qui crée ainsi un sillage,

Selon l'invention, ledit module de chambre de combustion comprend en outre des moyens de déflection qui s'étendent de l'amont vers l'aval en se rapprochant d'un plan médian dudit sillage et en se rapprochant de ladite paroi annulaire de la chambre de combustion, de manière à dévier, en direction dudit plan médian dudit sillage et en direction de ladite paroi annulaire de la chambre de combustion, une partie de l'air baignant ladite bougie d'allumage.

L'air ainsi dévié permet d'accroître la pression totale de l'air au sein du sillage induit par la bougie d'allumage, à proximité de la paroi annulaire de la chambre de combustion, et donc d'accroître l'écart de pression entre ledit sillage et l'intérieur de la chambre de combustion.

Il en résulte une amélioration du transfert convectif au travers des micro-perforations de ladite paroi annulaire, et donc une réduction des risques d'apparition de criques et des risques de pertes de métal, et donc d'une manière générale, une amélioration de la durée de vie de cette paroi annulaire.

Lorsque la bougie d'allumage est guidée au travers de la paroi annulaire de la chambre de combustion au moyen d'une douille montée dans l'orifice de passage de bougie, l'invention permet alors également de réduire les risques de désengagement de la douille.

Par « douille », il faut comprendre tout type de dispositif, éventuellement en plusieurs parties, permettant le guidage de la bougie au travers de la paroi annulaire de la chambre de combustion, comme cela apparaîtra plus clairement dans ce qui suit.

Dans un premier mode de réalisation préféré de l'invention, lesdits moyens de déflection comprennent deux conduits délimités chacun par une première paroi tangentielle agencée en regard de la paroi annulaire de la chambre de combustion, une seconde paroi tangentielle agencée du côté opposé à la paroi annulaire de la chambre de combustion, une première paroi latérale agencée du côté de la bougie d'allumage, et une seconde paroi latérale agencée du côté opposé à la bougie d'allumage.

De plus, chacun desdits conduits présente avantageusement au moins une entrée d'air pour prélever de l'air à dévier ainsi qu'au moins une sortie d'air pour diffuser l'air dévié en direction dudit plan médian dudit sillage.

En outre, lesdites secondes parois latérales respectives desdits conduits forment avantageusement des parois déflectrices disposées de part et d'autre de ladite bougie d'allumage et s'étendant de l'amont vers l'aval en se rapprochant dudit plan médian dudit sillage.

Enfin, lesdites parois tangentielles respectives desdits conduits s'étendent avantageusement vers l'aval en se rapprochant de la paroi annulaire de la chambre de combustion.

Lesdits conduits sont avantageusement portés par un support annulaire s'étendant autour de ladite bougie d'allumage.

En variante, lesdits moyens de déflection peuvent comprendre un conduit incurvé s'étendant autour d'une portion dudit orifice de passage de bougie et présentant deux entrés d'air formées à deux extrémités opposées dudit conduit pour prélever de l'air à dévier, et au moins un orifice de sortie d'air formé dans une partie médiane d'une paroi délimitant ledit conduit et débouchant dans ledit sillage.

Dans ce cas, ledit conduit est de préférence intégré à une douille montée dans ledit orifice de passage de bougie et destinée au guidage de ladite bougie d'allumage.

Dans un deuxième mode de réalisation préféré de l'invention, lesdits moyens de déflection comprennent une paroi déflectrice raccordée à un carter entourant ladite chambre de combustion et délimitant ladite enceinte annulaire, ladite paroi déflectrice étant conformée de sorte que lorsqu'elle est vue en section selon un quelconque plan parallèle audit plan médian dudit sillage, ladite paroi déflectrice s'étend vers l'aval en se rapprochant de ladite paroi annulaire de la chambre de combustion, et lorsqu'elle est vue en section selon un quelconque plan orthogonal à un axe de ladite bougie d'allumage, ladite paroi déflectrice s'étend vers l'aval en se rapprochant dudit plan médian dudit sillage.

Ladite paroi déflectrice s'inscrit de préférence dans un cylindre de révolution virtuel présentant un axe incliné par rapport à un plan orthogonal à l'axe de ladite bougie d'allumage.

L'invention concerne également une turbomachine, comprenant un module de chambre de combustion du type décrit ci-dessus, ainsi qu'un compresseur débouchant dans ladite enceinte annulaire dudit module de chambre de combustion.

Il est à noter que lorsque ledit compresseur est conçu pour délivrer audit module de chambre de combustion un flux d'air dépourvu de composante giratoire, alors ledit plan médian dudit sillage est un plan axial médian dudit orifice de passage de bougie.

L'invention concerne aussi un procédé de conception d'un module de chambre de combustion du type décrit ci-dessus pour une turbomachine d'aéronef comprenant un compresseur destiné à délivrer un flux d'air audit module de chambre de combustion.

Selon l'invention, le procédé comprend la détermination du sillage généré par ladite bougie d'allumage dans ladite partie du flux d'air baignant ladite bougie d'allumage, puis la définition géométrique desdits moyens de déflection de sorte que ces derniers s'étendent de l'amont vers l'aval en se rapprochant dudit plan médian dudit sillage et en se rapprochant de ladite paroi annulaire de la chambre de combustion.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en coupe axiale d'une turbomachine d'un type connu ;
- la figure 2, déjà décrite, est une demi-vue schématique partielle en coupe axiale d'une chambre annulaire de combustion de la turbomachine de la figure 1 ;
- la figure 3, déjà décrite, est une vue schématique partielle de dessus d'une paroi annulaire radialement externe de la chambre de combustion de la figure 2 ;
- la figure 4, déjà décrite, est un graphique représentant la pression totale (en abscisses) en fonction de la position circonférentielle (en ordonnée) le long du segment transversal S de la figure 3 ;
- les figures 5 et 6 sont des vues schématiques partielles en perspective d'un module de chambre de combustion selon un premier mode de réalisation préféré de l'invention ;
- la figure 7 est une vue schématique partielle en section axiale d'un module de chambre de combustion selon un deuxième mode de réalisation préféré de l'invention ;
- la figure 8 est une vue schématique partielle du module de chambre de combustion de la figure 7, en coupe selon un plan P1 ;
- la figure 9 est une vue schématique en perspective d'une paroi déflectrice du module de chambre de combustion de la figure 7.

Dans l'ensemble de ces figures, des références identiques peuvent désigner des éléments identiques ou analogues.

### EXPOSÉ DÉTAILLÉ DE MODES DE RÉALISATION PRÉFÉRÉS

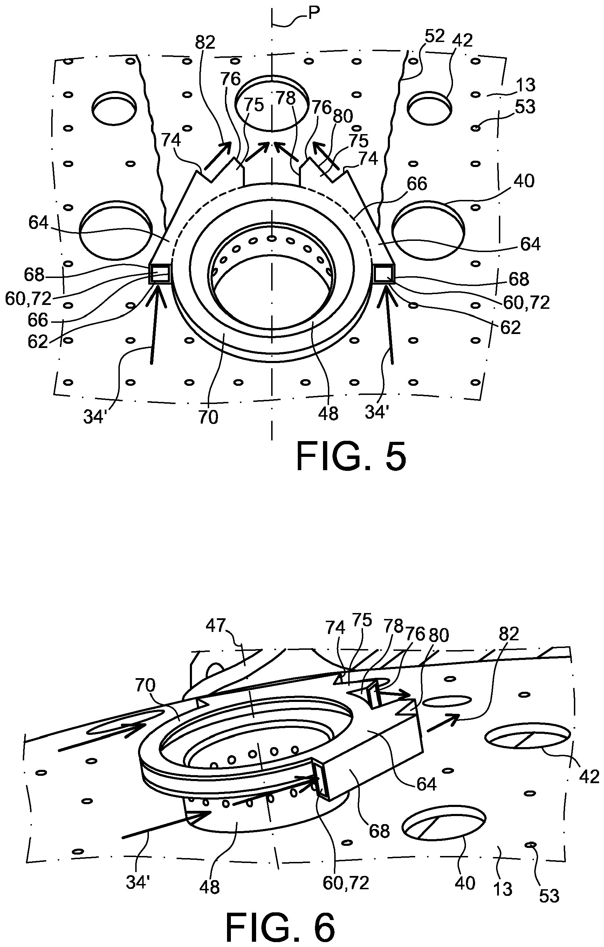

Les figures 5 et 6 illustrent un module de chambre de combustion d'une turbomachine selon un premier mode de réalisation de l'invention, et représentent plus particulièrement une région de la paroi annulaire radialement externe 13 de la chambre de combustion, pourvue d'un orifice 46 de passage de bougie dans lequel est montée une douille 48.

Le module de chambre de combustion comporte également une bougie d'allumage montée dans la douille 48, mais cette bougie d'allumage n'est pas représentée sur les figures 5 et 6 pour des raisons de clarté. Le module de chambre de combustion comporte également une enceinte annulaire délimitée par des carters intérieurs et extérieurs et dans laquelle est logée la chambre de combustion, de manière analogue à l'exemple de la figure 2. Ces éléments ne sont pas non plus visibles sur les figures 5 et 6. Ces figures 5 et 6 montrent également des orifices primaires 40 et des orifices de dilution 42, ainsi que des micro-perforations 53, ces éléments étant par exemple d'un type conventionnel.

Dans l'exemple illustré, la turbomachine considérée comporte un compresseur conçu pour délivrer au module de chambre de combustion un flux d'air dépourvu de composante giratoire. Un tel flux d'air s'écoule donc globalement selon une direction parallèle à l'axe 14 de la chambre de combustion.

Dans ce cas, comme expliqué ci-dessus, le sillage 52 induit par la bougie d'allumage et par la douille associée est sensiblement centré par rapport au plan axial médian P de l'orifice de passage de bougie 46. Ce dernier plan forme ainsi un plan médian du sillage.

Selon l'invention, le module de chambre de combustion comporte en outre des moyens de déflection pour dévier une partie de l'air 34' circulant à proximité de la bougie d'allumage en direction du plan médian P du sillage et de la paroi annulaire radialement externe 13 de la chambre de combustion, comme cela apparaîtra plus clairement dans ce qui suit.

Ainsi, dans le premier mode de réalisation illustré sur les figures 5 et 6, les moyens de déflection comportent deux conduits 60 délimités chacun par une première paroi tangentielle 62 agencée en regard de la paroi annulaire 13 de la chambre de combustion, une seconde paroi tangentielle 64 agencée du côté opposé à la paroi annulaire 13 de la chambre de combustion, une première paroi latérale 66 agencée en regard de la douille 48, et une seconde paroi latérale 68 agencée du côté opposé à la douille 48. Les deux parois latérales 66, 68 sont chacune raccordées aux deux parois tangentielles 62, 64, et ces dernières sont raccordées à un support annulaire 70 engagé sur la douille 48 de manière à s'étendre autour de la bougie d'allumage.

Les parois tangentielles 62 et 64 de chaque conduit sont conformées de manière à s'étendre vers l'aval en se rapprochant de la paroi annulaire 13 de la chambre de combustion, de manière à accroître l'action de l'air dévié dans la région du sillage 52 située à proximité de la douille 48.

Chacun des conduits 60 présente une entrée d'air 72 tournée vers l'amont, ainsi qu'une première sortie d'air 74 orientée vers l'aval et en direction du plan médian P du sillage. Dans l'exemple illustré, chaque conduit est prolongé au-delà de la première sortie d'air 74 par une extension de conduit 75 présentant une seconde sortie d'air 76.

La seconde paroi latérale 68 de chacun des conduits 60 s'étend vers l'aval en se rapprochant du plan médian P du sillage, et forme ainsi une paroi déflectrice apte à dévier l'air pénétrant dans le conduit en direction dudit plan.

Dans l'exemple illustré, la seconde paroi latérale 68 de chacun des conduits 60 s'étend parallèlement à l'axe de la bougie d'allumage, qui coïncide avec l'axe 47 de l'orifice de passage de bougie 46. La seconde paroi latérale 68 est ainsi sensiblement orthogonale à la paroi annulaire 13 de la chambre de combustion.

Chaque extension de conduit 75 est délimitée par une extension de chacune des parois tangentielles 62 et 64, et par une première paroi latérale d'extension 78 disposée du côté du plan médian P du sillage et une seconde paroi latérale d'extension 80 disposée du côté opposé. Cette dernière paroi s'étend vers l'aval en se rapprochant du plan médian P du sillage, selon un taux de rapprochement plus élevé que celui de la seconde paroi latérale 68 correspondante. Cette seconde paroi latérale d'extension 80 forme donc également une paroi déflectrice, dans la terminologie de l'invention.

De plus, dans l'exemple illustré, les deux conduits 60 sont agencés symétriquement par rapport au plan médian P du sillage.

En fonctionnement, une partie de l'air fourni au module de chambre de combustion par le compresseur de la turbomachine circule dans l'espace de contournement externe 38 le long de la paroi annulaire radialement externe 13 de la chambre de combustion. Une portion 34' de cet air, passant à proximité de la bougie d'allumage et de la douille 48 associée, pénètre dans les conduits 60 et se trouve guidée par les secondes parois latérales 68 et par les secondes parois latérales d'extension 80. Les conduits 60 délivrent ainsi au travers de leurs sorties 74 et 76 un flux d'air 82 dévié en direction du plan médian P du sillage et de la paroi annulaire externe 13 de la chambre de combustion. Il en résulte un accroissement de la pression totale de l'air dans la zone correspondant au sillage 52 à proximité de la paroi annulaire 13, permettant d'améliorer les échanges convectifs au travers des micro-perforations 53, et donc d'améliorer le refroidissement de la paroi annulaire 13.

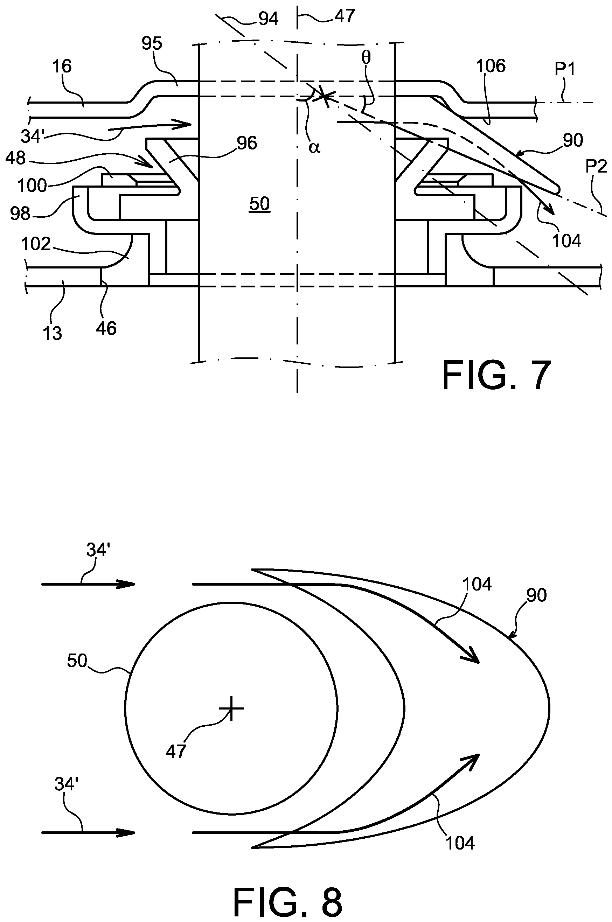

Dans un deuxième mode de réalisation préféré de l'invention illustré sur les figures 7 à 9, les moyens de déflection comportent une paroi déflectrice 90 raccordée au carter externe 16 (figures 7 et 2) entourant la chambre de combustion 8 et délimitant l'enceinte annulaire dans laquelle est logée cette chambre de combustion.

Cette paroi déflectrice 90 est conformée de sorte que lorsqu'elle est vue en section selon un quelconque plan parallèle au plan médian P du sillage, la paroi déflectrice 90 s'étend vers l'aval en se rapprochant de la paroi annulaire 13 de la chambre de combustion, et de sorte que lorsqu'elle est vue en section selon un quelconque plan orthogonal à l'axe de la bougie d'allumage qui coïncide avec l'axe 47 de l'orifice de passage de bougie 46, la paroi déflectrice 90 s'étend vers l'aval en se rapprochant du plan médian P du sillage.

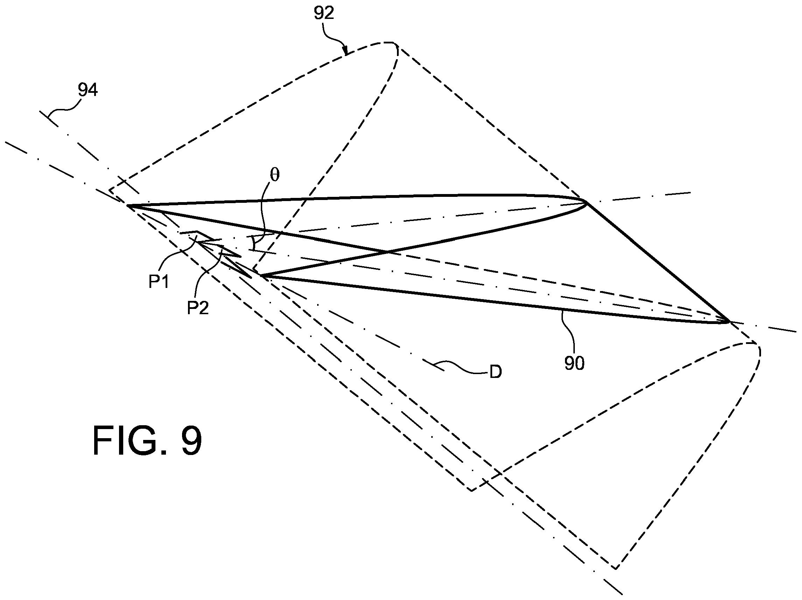

A cet effet, dans l'exemple illustré, la paroi déflectrice 90 s'inscrit dans un cylindre virtuel de révolution 92, comme l'illustre la figure 9. Plus précisément, la paroi déflectrice 90 correspond à une section du cylindre 92 délimitée par deux plans P1 et P2 sécants selon une ligne D orthogonale à l'axe 94 du cylindre 92. Le plan P1 délimite un bord supérieur de la paroi déflectrice 90, par lequel cette dernière est raccordée au carter externe 16. Le plan P1 est ainsi tangent à ce carter 16, et est par exemple orthogonal à l'axe 47 de l'orifice de passage de bougie 46. Le plan P2 délimite un bord inférieur de la paroi déflectrice 90. Les deux plans P1 et P2 font entre eux un angle 0, par exemple égal à 30 degrés environ. De plus, l'axe 94 du cylindre virtuel 92 fait par exemple un angle α égal à 45 degrés environ avec l'axe 47 de l'orifice de passage de bougie 46. L'axe 94 du cylindre est ainsi incliné par rapport au plan P1.

A titre d'exemple, comme le montre la figure 7, le carter externe 16 comporte un bossage 95 pourvu d'un orifice au travers duquel s'étend la bougie d'allumage 50. La paroi déflectrice 90 est alors avantageusement fixée sur ce bossage 95.

La figure 7 montre également un exemple plus détaillé de douille 48 destinée au guidage de la bougie d'allumage 50. Cette douille 48 comporte un guide de bougie 96 monté sur une cheminée 98 et retenu sur cette dernière par une pièce annulaire 100 parfois dénommé « coupelle », ainsi qu'une bague 102 sertie dans l'orifice de passage de bougie 46 et dans laquelle est sertie la cheminée 98. D'une manière connue en soi, le guide de bougie 96 présente ainsi une liberté de mouvement perpendiculairement à l'axe 47 de l'orifice de passage de bougie 46, ce qui permet à la douille 48 de tolérer les déformations du module de chambre de combustion induites par les phénomènes habituels de dilatations différentielles.

En fonctionnement, comme l'illustrent les figures 7 et 8, une partie de l'air fourni au module de chambre de combustion par le compresseur de la turbomachine circule dans l'espace de contournement externe 38 le long de la paroi annulaire radialement externe 13 de la chambre de combustion. Une portion 34' de cet air, passant à proximité de la bougie d'allumage, circule en direction de la paroi déflectrice 90 et se trouve dévié par cette dernière de manière à constituer un flux d'air 104 dévié en direction du plan médian P du sillage et en direction de la paroi annulaire 13 de la chambre de combustion.

Il en résulte là encore un accroissement de la pression totale de l'air dans la zone correspondant au sillage, permettant d'améliorer les échanges convectifs au travers des micro-perforations de la paroi annulaire 13.

Dans l'exemple illustré, la paroi déflectrice 90 permet en outre de masquer une région du carter externe 16 située en aval du bossage 95 de ce dernier, et permet ainsi de réduire le niveau de transfert thermique par convection entre l'air et le carter externe 16 au niveau de cette zone. Il en résulte une réduction des contraintes thermiques appliquées à cette région particulièrement exposée du carter externe 16, et donc une amélioration de la durée de vie de ce carter.

D'une manière générale, l'invention permet donc d'améliorer la durée de vie de la paroi annulaire 13 de la chambre de combustion dans la région du sillage 52 et de réduire les risques de dessertissage d'éléments formant la douille 48 destinée au guidage de la bougie d'allumage au travers de la paroi annulaire 13.

L'invention peut en outre permettre d'améliorer la durée de vie du carter externe 16 lorsque ce dernier présente un bossage 95 tel que décrit ci-dessus.

Dans les exemples décrits ci-dessus en référence aux figures annexées, le compresseur de la turbomachine est du type délivrant un flux d'air 34' dépourvu de composante giratoire, de sorte que le plan médian P du sillage est un plan passant par l'axe 14 de la chambre de combustion.

Bien entendu, l'invention est également applicable aux turbomachines dont le compresseur est conçu pour délivrer un flux d'air suivant un mouvement de giration. Dans ce cas, le plan médian P du sillage est incliné par rapport à l'axe 14 de la chambre de combustion, et l'orientation des moyens déflecteurs selon l'invention peut être adaptée en conséquence.

## Revendications

1. Module de chambre de combustion pour turbomachine, comprenant :
- une enceinte annulaire (36, 38, 39),
- une chambre de combustion annulaire (8) logée dans ladite enceinte annulaire et comportant au moins une paroi annulaire (13) délimitant ladite chambre de combustion et comportant un orifice (46) de passage de bougie ainsi qu'une pluralité de micro-perforations (53) pour l'entrée d'air de refroidissement dans ladite chambre de combustion pour le refroidissement de ladite paroi annulaire (13), et
- une bougie d'allumage (50) s'étendant dans ladite enceinte annulaire et au travers dudit orifice (46) de passage de bougie,
ledit module étant destiné à recevoir un flux d'air (26) issu d'un compresseur de turbomachine et s'écoulant globalement de l'amont vers l'aval de la chambre de combustion au sein de ladite enceinte annulaire, et dont une partie (34') a vocation à contourner la chambre de combustion en longeant ladite paroi annulaire (13) de celle-ci et en baignant ladite bougie d'allumage (50) qui crée ainsi un sillage (52),
ledit module de chambre de combustion étant **caractérisé en ce qu'**il comprend en outre des moyens de déflection (60, 64, 68, 90) qui s'étendent de l'amont vers l'aval en se rapprochant d'un plan médian (P) dudit sillage et en se rapprochant de ladite paroi annulaire (13) de la chambre de combustion, de manière à dévier, en direction dudit plan médian (P) dudit sillage et en direction de ladite paroi annulaire (13), une partie (82, 104) de l'air baignant ladite bougie d'allumage.

2. Module de chambre de combustion selon la revendication 1, dans lequel :
- lesdits moyens de déflection comprennent deux conduits (60) délimités chacun par une première paroi tangentielle (62) agencée en regard de la paroi annulaire (13) de la chambre de combustion, une seconde paroi tangentielle (64) agencée du côté opposé à la paroi annulaire (13) de la chambre de combustion, une première paroi latérale (66) agencée du côté de la bougie d'allumage (50), et une seconde paroi latérale (68) agencée du côté opposé à la bougie d'allumage (50) ;
- chacun desdits conduits présente au moins une entrée d'air (72) pour prélever de l'air à dévier ainsi qu'au moins une sortie d'air (74, 76) pour diffuser l'air dévié (82) en direction dudit plan médian (P) dudit sillage ;
- lesdites secondes parois latérales respectives desdits conduits forment des parois déflectrices (68) disposées de part et d'autre de ladite bougie d'allumage (50) et s'étendant de l'amont vers l'aval en se rapprochant dudit plan médian (P) dudit sillage ;
- lesdites parois tangentielles (62, 64) respectives desdits conduits s'étendent vers l'aval en se rapprochant de la paroi annulaire (13) de la chambre de combustion.

3. Module de chambre de combustion selon la revendication 2, dans lequel lesdits conduits (60) sont portés par un support annulaire (70) s'étendant autour de ladite bougie d'allumage (50).

4. Module de chambre de combustion selon la revendication 1, dans lequel lesdits moyens de déflection comprennent un conduit incurvé s'étendant autour d'une portion dudit orifice de passage de bougie et présentant deux entrés d'air formées à deux extrémités opposées dudit conduit pour prélever de l'air à dévier, et au moins un orifice de sortie d'air formé dans une partie médiane d'une paroi délimitant ledit conduit et débouchant dans ledit sillage.

5. Module de chambre de combustion selon la revendication 4, dans lequel ledit conduit est intégré à une douille montée dans ledit orifice de passage de bougie et destinée au guidage de ladite bougie d'allumage.

6. Module de chambre de combustion selon la revendication 1, comprenant en outre un carter (16) entourant ladite chambre de combustion et délimitant ladite enceinte annulaire (36, 38, 39), lesdits moyens de déflection comprenant une paroi déflectrice (90) raccordée audit carter (16), ladite paroi déflectrice (90) étant conformée de sorte que lorsqu'elle est vue en section selon un quelconque plan parallèle audit plan médian (P) dudit sillage, ladite paroi déflectrice s'étend vers l'aval en se rapprochant de ladite paroi annulaire (13) de la chambre de combustion, et lorsqu'elle est vue en section selon un quelconque plan (P1) orthogonal à un axe (47) de ladite bougie d'allumage, ladite paroi déflectrice s'étend vers l'aval en se rapprochant dudit plan médian (P) dudit sillage.

7. Module de chambre de combustion selon la revendication 6, dans lequel ladite paroi déflectrice (90) s'inscrit dans un cylindre de révolution virtuel (92) présentant un axe (94) incliné par rapport à un plan (P1) orthogonal à l'axe (47) de ladite bougie d'allumage.

8. Turbomachine, comprenant un module de chambre de combustion selon l'une quelconque des revendications précédentes, ainsi qu'un compresseur débouchant dans ladite enceinte annulaire dudit module de chambre de combustion.

9. Procédé de conception d'un module de chambre de combustion selon l'une quelconque des revendications 1 à 7 pour une turbomachine d'aéronef comprenant un compresseur destiné à délivrer un flux d'air (26) audit module de chambre de combustion, **caractérisé en ce qu'**il comprend la détermination du sillage (52) généré par ladite bougie d'allumage (50) dans ladite partie (34') du flux d'air baignant ladite bougie d'allumage, puis la définition géométrique desdits moyens de déflection (60, 68, 90) de sorte que ces derniers s'étendent de l'amont vers l'aval en se rapprochant dudit plan médian (P) dudit sillage et en se rapprochant de ladite paroi annulaire (13) de la chambre de combustion.

## Patentansprüche

1. Brennkammer-Modul für Turbotriebwerke, bestehend aus:
- einem ringförmigen abgeschlossenen Raum (36, 38, 39),
- einer ringförmigen Brennkammer (8), die in dem genannten ringförmigen abgeschlossenen Raum aufgenommen ist und mindestens eine ringförmige Wandung (13) aufweist, die diese Brennkammer abgrenzt und eine Zündkerzen-Durchlassöffnung (46) sowie eine Vielzahl von Mikroperforierungen (53) für die Zuführung von Kühlungsluft in die genannte Brennkammer zum Kühlen der genannten ringförmigen Wandung (13) aufweist, und
- einer Zündkerze (50), die sich in dem genannten ringförmigen abgeschlossenen Raum und durch die genannte Zündkerzen-Durchlass-Öffhung (46) erstreckt,
wobei dieses Modul dazu bestimmt ist, einen Luftstrom (26) aufzunehmen, der von einem Turbotriebwerk-Verdichter kommt und allgemein von stromaufwärts nach stromabwärts der Brennkammer in dem genannten ringförmigen abgeschlossenen Raum strömt, und von dem ein Teil (34') den Zweck erfüllt, um die Brennkammer herum an deren ringförmiger Wandung (13) entlang zu strömen und die genannte Zündkerze (50) zu umspülen, die auf diese Weise einen Strudel (52) erzeugt,
**dadurch gekennzeichnet,**
**dass** es ferner Umlenkmittel (60, 64, 68, 90) aufweist, die sich von stromaufwärts nach stromabwärts erstrecken und sich dabei einer Mittelebene (P) des genannten Strudels annähern und sich dabei der genannten ringförmigen Wandung (13) der Brennkammer annähern, so dass sie einen Teil (82, 104) der die Zündkerze umspülenden Luft in Richtung der genannten Mittelebene (P) des genannten Strudels und in Richtung der genannten ringförmigen Wandung (13) umlenken.

2. Brennkammer-Modul nach Anspruch 1, bei dem
- die genannten Umlenkmittel zwei Leitungen (60) umfassen, die jeweils umgrenzt sind von einer ersten tangentialen Wand (62), die auf der der ringförmigen Wandung (13) der Brennkammer zugewandten Seite angeordnet ist, einer zweiten tangentialen Wand (64), die auf der von der ringförmigen Wandung (13) der Brennkammer abgewandten Seite angeordnet ist, einer ersten Seitenwand (66), die auf der der Zündkerze (50) zugewandten Seite angeordnet ist, einer zweiten Seitenwand (68), die auf der von der Zündkerze (50) abgewandten Seite angeordnet ist;
- jede der genannten Leitungen wenigstens einen Lufteinlass (72) aufweist, um umzulenkende Luft zu entnehmen, sowie wenigstens einen Luftauslass (74, 76) aufweist, um die umgelenkte Luft (82) in Richtung der genannten Mittelebene (P) des genannten Strudels ausströmen zu lassen;
- die jeweiligen genannten zweiten Seitenwände der genannten Leitungen Umlenkwandungen (68) bilden, die beiderseits der genannten Zündkerze (50) angeordnet sind und sich von stromaufwärts nach stromabwärts erstrecken, wobei sie sich der genannten Mittelebene (P) des genannten Strudels annähern;
- die jeweiligen genannten tangentialen Wände (62, 64) der genannten Leitungen sich nach stromabwärts erstrecken, wobei sie sich der ringförmigen Wandung (13) der Brennkammer annähern.

3. Brennkammer-Modul nach Anspruch 2, bei dem die genannten Leitungen (60) durch eine ringförmige Halterung (70) gehalten werden, die sich um die genannte Zündkerze (50) herum erstreckt.

4. Brennkammer-Modul nach Anspruch 1, bei dem die genannten Umlenkmittel eine gebogene Leitung umfassen, die sich um einen Teil der genannten Zündkerzen-Durchlassöffnung herum erstreckt und zwei Lufteinlässe aufweist, die an zwei voneinander abgewandten Enden dieser Leitung gebildet sind, um umzulenkende Luft zu entnehmen, sowie wenigstens eine Luftauslassöffnung aufweist, die in einem mittleren Teil einer Wand gebildet ist, die diese Leitung abgrenzt und in den genannten Strudel mündet.

5. Brennkammer-Modul nach Anspruch 4, bei dem die genannte Leitung in einer Hülse eingebaut ist, die in der genannten Zündkerzen-Durchlassöffnung angebracht ist und zur Führung der genannten Zündkerze vorgesehen eist.

6. Brennkammer-Modul nach Anspruch 1, das ferner ein Gehäuse (16) aufweist, das die genannte Brennkammer umgibt und den genannten ringförmigen abgeschlossenen Raum (36, 38, 39) umgrenzt, wobei die genannten Umlenkmittel eine Umlenkwand (90) umfassen, die mit dem genannten Gehäuse (16) verbunden ist, wobei diese Umlenkwand (90) dergestalt ausgeführt ist, dass sich, wenn sie im Schnitt in einer beliebigen parallelen Ebene zu der genannten Mittelebene (P) des genannten Strudels betrachtet wird, diese Umlenkwand nach stromabwärts erstreckt, wobei sie sich der ringförmigen Wandung (13) der Brennkammer annähert, und wenn sie im Schnitt in einer beliebigen Ebene (P1) im rechten Winkel zu einer Achse (47) der genannten Zündkerze betrachtet wird, diese Umlenkwand nach stromabwärts erstreckt, wobei sie sich der genannten Mittelebene (P) des genannten Strudels annähert.

7. Brennkammer-Modul nach Anspruch 6, bei dem die genannte Umlenkwand (90) in einem virtuellen Rotationszylinder (92) einbeschrieben ist, der eine Achse (94) aufweist, die gegenüber einer Ebene (P1) geneigt ist, die im rechten Winkel zu der Achse (47) der genannten Zündkerze liegt.

8. Turbotriebwerk, das ein Brennkammer-Modul nach einem der vorherigen Ansprüche sowie einen Verdichter, der in den genannten ringförmigen abgeschlossenen Raum dieses Brennkammer-Moduls mündet, enthält.

9. Verfahren des Konzipierens eines Brennkammer-Moduls nach einem der Ansprüche 1 bis 7 für ein Turbotriebwerk von Luftfahrzeugen mit einem Verdichter, der dazu vorgesehen ist, diesem Brennkammer-Modul einen Luftstrom (26) zuzuführen,
**dadurch gekennzeichnet,**
**dass** es die Bestimmung des Strudels (52) umfasst, der von der genannten Zündkerze (50) in dem genannten Teil (34') des die Zündkerze umspülenden Luftstroms erzeugt wird, sodann die geometrische Definition der genannten Umlenkmittel (60, 68, 90) dergestalt umfasst, dass letztere sich von stromaufwärts nach stromabwärts erstrecken und sich dabei der genannten Mittelebene (P) des genannten Strudels annähern und sich dabei der genannten ringförmigen Wandung (13) der Brennkammer annähern.

## Claims

1. A combustion chamber module for a turbomachine, comprising:
- an annular enclosure (36, 38, 39),
- an annular combustion chamber (8) accommodated in said annular enclosure and including at least one annular wall (13) delimiting said combustion chamber and including a plug port (46) as well as a plurality of micro-perforations (53) to let in cooling air in said combustion chamber for cooling said annular wall (13), and
- an ignition plug (50) extending in said annular enclosure and through said plug port (46),
said module being intended to receive an airflow (26) coming from a turbomachine compressor and generally flowing from upstream to downstream of the combustion chamber within said annular enclosure, and a part (34') of which is designed to bypass the combustion chamber by running along said annular wall (13) thereof and by immersing
said ignition plug (50) which thus creates a wake (52),
said combustion chamber module being **characterized in that** it further comprises deflection means (60, 64, 68, 90) extending from upstream to downstream by approaching a median plane (P) of said wake and by approaching said annular wall (13) of the combustion chamber, so as to divert, towards said median plane (P) of said wake and towards said annular wall (13), part (82, 104) of the air immersing said ignition plug.

2. The combustion chamber module according to claim 1, wherein:
- said deflection means comprise two ducts (60) each delimited by a first tangential wall (62) arranged facing the annular wall (13) of the combustion chamber, a second tangential wall (64) arranged on the opposite side with respect to the annular wall (13) of the combustion chamber, a first sidewall (66) arranged on the side of the ignition plug (50), and a second sidewall (68) arranged on the opposite side with respect to the ignition plug (50);
- each of said ducts has at least one air inlet (72) to draw air to be diverted as well as at least one air outlet (74, 76) to diffuse the diverted air (82) towards said median plane (P) of said wake;
- said respective second sidewalls of said ducts form deflecting walls (68) provided on either side of said ignition plug (50) and extending from upstream to downstream by approaching said median plane (P) of said wake;
- said respective tangential walls (62, 64) of said ducts extend in the downstream direction by approaching the annular wall (13) of the combustion chamber.

3. The combustion chamber module according to claim 2, wherein said ducts (60) are carried by an annular support (70) extending around said ignition plug (50).

4. The combustion chamber module according to claim 1, wherein said deflection means comprise a curved duct extending around a portion of said plug port and having two air inlets formed at two opposite ends of said duct to draw air to be diverted, and at least one air outlet port formed in a median part of a wall delimiting said duct and opening into said wake.

5. The combustion chamber module according to claim 4, wherein said duct is fitted in a bushing mounted in said plug port and intended to guide said ignition plug.

6. The combustion chamber module according to claim 1, further comprising a casing (16) surrounding said combustion chamber and delimiting said annular enclosure (36, 38, 39), said deflection means comprising a deflecting wall (90) connected to said casing (16), said deflecting wall (90) being shaped so that, when seen in cross-section along any plane parallel to said median plane (P) of said wake, said deflecting wall extends in the downstream direction by approaching said annular wall (13) of the combustion chamber, and when seen in cross-section along any plane (P1) orthogonal to an axis (47) of said ignition plug, said deflecting wall extends in the downstream direction by approaching said median plane (P) of said wake.

7. The combustion chamber module according to claim 6, wherein said deflecting wall (90) is inscribed in a virtual cylinder of revolution (92) having an axis (94) inclined relative to a plane (P1) orthogonal to the axis (47) of said ignition plug.

8. A turbomachine, comprising a combustion chamber module according to any of the preceding claims, as well as a compressor opening into said annular enclosure of said combustion chamber module.

9. A method for designing a combustion chamber module according to any of claims 1 to 7 for an aircraft turbomachine comprising a compressor intended to deliver an airflow (26) to said combustion chamber module, **characterized in that** it comprises determining the wake (52) produced by said ignition plug (50) in said part (34') of the airflow immersing said ignition plug, and then geometrically defining said deflection means (60, 68, 90) so that the latter extend from upstream to downstream by approaching said median plane (P) of said wake and by approaching said annular wall (13) of the combustion chamber.
